# EUROPÄISCHE PATENTANMELDUNG

(11) **EP 4 331 880 A1**
(43) Veröffentlichungstag der Anmeldung: **06.03.2024**
(21) Anmeldenummer: 22193043.1
(22) Anmeldetag: 31.08.2022
(51) Int. Cl.: B60H 3/00

(54) **KRAFTFAHRZEUG MIT BEDUFTUNGSVORRICHTUNG**

(71) Anmelder: Supair-Tel AG, 8152 Glattbrugg (CH)
(72) Erfinder: Guggenheim, Rudolf Heinrich, 8832 Wollerau (CH)
(74) Vertreter: E. Blum & Co. AG

(57) **Zusammenfassung**

Ein Kraftfahrzeug, insbesondere ein Personenkraftwagen, umfasst einen Innenraum (5), eine Türe (6) und eine Beduftungsvorrichtung (1) mit einem Duftstoff. Die Beduftungsvorrichtung (1) ist derart angeordnet und ausgestaltet, dass die Beduftungsvorrichtung (1) nur bei geöffneter Türe (6) den Duftstoff emittiert. Dadurch nimmt der Benutzer des Kraftfahrzeuges den Duftstoff nur während des Ein- und Aussteigens wahr und gewöhnt sich nicht während der Fahrt an den Duftstoff.

## Beschreibung

### Gebiet der Erfindung

Die Erfindung betrifft ein Kraftfahrzeug, insbesondere einen Personenkraftwagen, mit einem Innenraum, einer Türe und einer Beduftungsvorrichtung, welche einen Duftstoff umfasst. Zudem betrifft die Erfindung eine solche Beduftungsvorrichtung und ein Verfahren zum Auswechseln dieser Beduftungsvorrichtung.

### Hintergrund

Es sind Beduftungsvorrichtungen bekannt, welche im Fahrzeuginnenraum aufgehängt werden können und z.B. ein mit Duftstoff getränktes Material aufweisen. Solche Vorrichtungen sind kostengünstig herstellbar, ihre Beduftungswirkung kann aber ungleichmässig sein und der in der Regel am Innenrückspiegel aufgehängte Duftkörper kann sichtbehindernd sein.

Im Weiteren sind Behälter mit Duftstoff bekannt, welche an einem Lüftungsgitter im Innenraum eines Fahrzeuges befestigt werden. Der Behälter für den Duftstoff weist Einlassöffnungen auf, sodass Luft aus der Lüftung in den Behälter hineinströmt, mit dem Duftstoff in Kontakt gerät und angereichert mit Duftmolekülen den Behälter durch Auslassöffnungen verlässt. Solche Behälter können mittels eines Klemmteils am Lüftungsgitter befestigt und von diesem auch wieder entfernt werden.

Nach einer gewissen Zeitdauer gewöhnen sich die Insassen an den Duft und nehmen diesen nicht mehr bewusst wahr. Die Beduftungsvorrichtung erfüllt seinen Zweck nicht mehr.

### Darstellung der Erfindung

Es stellt sich die Aufgabe, ein Kraftfahrzeug mit einer Beduftungsvorrichtung bereitzustellen, wobei die Benutzer des Kraftfahrzeuges den Duftstoff der Beduftungsvorrichtung gut wahrnehmen können.

Diese Aufgabe wird durch ein Kraftfahrzeug mit den Merkmalen des Anspruchs 1 gelöst. Demgemäss umfasst ein Kraftfahrzeug, insbesondere ein Personenkraftwagen, einen Innenraum, eine Türe und eine Beduftungsvorrichtung. Die Beduftungsvorrichtung umfasst einen Duftstoff. Die Beduftungsvorrichtung ist derart angeordnet und ausgestaltet, dass die Beduftungsvorrichtung nur bei geöffneter Türe den Duftstoff emittiert.

Der Duftstoff wird nur kurzzeitig abgegeben, nämlich während die Türe geöffnet ist. Ist die Türe geschlossen, emittiert kein Duftstoff. Insbesondere emittiert der Duftstoff mittels eines einzelnen Schubs, welcher durch die Öffnung der Türe ausgelöst wird, oder permanent, während die Türe geöffnet bleibt.

Da die Beduftungsvorrichtung bei geschlossener Türe keinen Duftstoff emittiert, und sich der Duftstoff aufgrund der kurzen Emissionsdauer bei geöffneter Türe auch nicht in den Sitzen oder anderen Bestandteilen des Kraftfahrzeugs absetzt, nehmen die Insassen den Duftstoff während ihres Aufenthaltes im Innenraum des Kraftfahrzeuges nicht wahr, sondern nur während dem Einsteigen und dem Aussteigen in und aus dem Kraftfahrzeug. Die Insassen sind somit nur kurzzeitig mit dem Duftstoff konfrontiert, gewöhnen sich nicht daran, insbesondere nicht während einer langen Fahrt, und nehmen den Duftstoff während der kurzen Emissionsdauer umso bewusster wahr, d.h. während dem Ein- und Aussteigen in und aus dem Kraftfahrzeug.

Mit Vorteil ist die Beduftungsvorrichtung derart angeordnet und ausgestaltet, dass die Beduftungsvorrichtung bei offener Türe zumindest teilweise freigelegt und bei geschlossener Türe verdeckt, insbesondere vollständig verdeckt, ist. Wird die Beduftungsvorrichtung bei geschlossener Türe verdeckt, kann die Emission von Duftstoff bei geschlossener Türe in einfacher Weise verhindert werden. Wird die Beduftungsvorrichtung durch Öffnen der Türe freigelegt, emittiert sofort Duftstoff.

Insbesondere ist die Beduftungsvorrichtung derart angeordnet und ausgestaltet, dass die Beduftungsvorrichtung bei geschlossener Türe sowohl für einen Insassen als auch für eine Person ausserhalb des Kraftfahrzeuges nicht sichtbar oder zugänglich ist.

Vorteilhaft ist die Beduftungsvorrichtung derart angeordnet und ausgestaltet, dass
- alleine eine Schliessbewegung der Türe die Beduftungsvorrichtung verdeckt, und
- alleine eine Öffnungsbewegung der Türe die Beduftungsvorrichtung freilegt.

Diese Konfiguration hat den Vorteil, dass einerseits eine regelmässige Emission von Duftstoff während kurzen Zeitdauern gewährleistet ist. Andererseits steuert der Benutzer die Emission des Duftstoffs selbst, nämlich durch Öffnen und Schliessen der Türe, aber unbewusst, und dies verbunden mit dem Vorteil, dass der Duftstoff gerade dann emittiert, wenn der Benutzer in der Nähe ist und den Duftstoff bewusst wahrnehmen kann.

Insbesondere ist die Beduftungsvorrichtung derart angeordnet und ausgestaltet, dass die Beduftungsvorrichtung bei geschlossener Türe sowohl in Berührung mit einem Türrahmen als auch in Berührung mit der Türe steht. Der Türrahmen ist als das Gegenstück zur Türe zu verstehen. Der Türrahmen umrahmt die Türe in geschlossener Stellung, während sich die Türe bei der Türöffnung aus dem Türrahmen herausbewegt. Bestandteil des Türrahmens können beispielsweise die A-, B-, C- oder D-Säulen sein, oder auch der Türschweller.

Die Beduftungsvorrichtung ist bei geschlossener Türe somit von Türe und Türrahmen umgeben bzw. Türe und Türrahmen klemmen die Beduftungsvorrichtung bei geschlossener Türe ein.

Mit Vorteil ist die Beduftungsvorrichtung an einer Schmalseite der Türe angeordnet, insbesondere an der Schmalseite befestigt, insbesondere mittels Adhäsion, insbesondere mittels eine Doppelklebestreifens. Die Schmalseite der Türe ist diejenige Seite der Türe, welche sich über die Dicke der Türe erstreckt. Im Normalfall ist die Schmalseite der Türe mit dem Türrahmen in Berührung bzw. von diesem Umgeben, sofern die Türe geschlossen ist. Die Anordnung der Beduftungsvorrichtung an der Schmalseite ist unauffällig, aber bei geöffneter Türe trotzdem gut zugänglich, sodass die Beduftungsvorrichtung in einfacher Weise ausgewechselt werden kann.

Vorteilhaft ist die Beduftungsvorrichtung am Türrahmen des Kraftfahrzeuges angeordnet, insbesondere am Türrahmen befestigt, insbesondere mittels Adhäsion, insbesondere mittels eine Doppelklebestreifens. Auch bei dieser Konfiguration ist die Beduftungsvorrichtung unauffällig positioniert, aber bei geöffneter Türe gut zugänglich.

Insbesondere ist die Beduftungsvorrichtung an einer Oberfläche der Karosserie angeordnet, welche von der Türe, insbesondere von der Schmalseite der Türe, bei geschlossener Türe verdeckt ist.

Unter der "Türe" kann insbesondere eine Seitentüre oder eine Kofferraumtüre gemeint sein. Die Beduftungsvorrichtung kann somit derart montiert sein, dass der Benutzer nicht nur beim Ein- und Aussteigen den Duftstoff wahrnimmt, sondern auch bei geöffneter Kofferraumtüre, während er Gegenstände in den Kofferraum einführt oder aus diesem herausnimmt.

Mit Vorteil weist die Türe ein Fenster auf und die Beduftungsvorrichtung ist unterhalb des Fensters angeordnet. Diese Anordnung ist insbesondere deshalb vorteilhaft, weil die Fenster an den Türen selbst nicht umrahmt sein müssen und in diesem Fall die Anbringung der Beduftungsvorrichtung im Bereich des Fensters problematisch wäre.

Im Weitern stellt sich die Aufgabe, eine Beduftungsvorrichtung bereitzustellen, welche in einem Kraftfahrzeug derart eingebaut werden kann, dass die Benutzer des Kraftfahrzeuges den Duftstoff der Beduftungsvorrichtung gut wahrnehmen.

Diese Aufgabe wird durch eine Beduftungsvorrichtung gelöst, welche einen Duftstoff umfasst und eine flache Form aufweist. Die flache Form verfügt über eine Dicke, welche insbesondere über die Beduftungsvorrichtung hinweg konstant sein kann.

Mit Vorteil ist das Zehnfache, insbesondere das Zwanzigfache, insbesondere das Vierzigfache, der Dicke kleiner als die längste Erstreckung, insbesondere geradlinige Erstreckung, der Beduftungsvorrichtung. Mit anderen Worten ist die Beduftungsvorrichtung flach ausgestaltet, sodass die Dicke deutlich kleiner ist wie eine andere Erstreckung der Beduftungsvorrichtung.

Die Ausgestaltung der Beduftungsvorrichtung als flaches Bauteil hat den Vorteil, dass es in einfacher Weise zwischen Türe und die Türe umgebenden Türrahmen befestigt werden kann, ohne dass Türe oder Türrahmen eine Aussparung zur Aufnahme der Beduftungsvorrichtung aufweisen müssten. Zudem kann eine solche Beduftungsvorrichtung bei jedem Kraftfahrzeug problemlos montiert, insbesondere nachträglich montiert, werden.

Mit Vorteil umfasst die Beduftungsvorrichtung eine Hülle und einen Duftkörper. Die Hülle dient zum Schutz des Duftkörpers und zur Befestigung des Duftkörpers am Kraftfahrzeug. Im Duftkörper ist der Duftstoff gespeichert.

Insbesondere ist die Hülle für den Duftstoff durchlässig, insbesondere ist die Hülle perforiert. Die Emission von Duftstoff aus der Beduftungsvorrichtung ist dadurch gewährleistet.

Insbesondere ist der Duftkörper zur Vergrösserung der Oberfläche des Duftkörpers gewellt ausgestaltet. Der Duftstoff kann dadurch noch besser aus dem Duftkörper emittieren.

Die Hülle kann beispielsweise aus dem Material PVC (Polyvinylchlorid) bestehen. Der Duftkörper kann beispielsweise aus dem Material EVA (Ethylenvinylacetat) bestehen, wobei der Duftstoff während dem Spritzgiessen in den Kunststoff eingespritzt wird.

Vorteilhaft ist die Beduftungsvorrichtung entlang ihrer längsten Erstreckung bis mindestens zu einer Krümmung von 1/100 mm⁻¹, insbesondere bis zu einer Krümmung von mindestens 1/75 mm⁻¹, insbesondere bis zu einer Krümmung von mindestens 1/50 mm⁻¹, elastisch krümmbar. Dies hat den Vorteil, dass die Beduftungsvorrichtung an gekrümmten Oberflächen der Karosserie bzw. an gekrümmten Oberflächen der Türe befestigt werden kann. Die Beduftungsvorrichtung kann flexibel eingesetzt werden.

Im Übrigen kann vorgesehen sein, dass die Beduftungsvorrichtung jeweils ausgewechselt wird, während in einer Kraftfahrzeugwerkstatt Unterhaltsarbeiten am Fahrzeug durchgeführt werden. Der Duftstoff kann nachgefüllt oder die Beduftungsvorrichtung kann vollständig ausgewechselt werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1a und 1b die Beduftungsvorrichtung mit Frontansicht und Seitenansicht;
Fig. 1c der Duftkörper der Beduftungsvorrichtung in Seitenansicht;
Fig. 2 ein Kraftfahrzeug mit an der Fahrertüre montierter Beduftungsvorrichtung;
Fig. 3 ein Kraftfahrzeug mit am Türrahmen der Fahrertüre montierter Beduftungsvorrichtung;
Fig. 4 ein Kraftfahrzeug mit an der Türe der Rücksitze montierter Beduftungsvorrichtung;
Fig. 5 ein Kraftfahrzeug mit am Türrahmen der Türe bei den Rücksitzen montierter Beduftungsvorrichtung; und
Fig. 6 ein Kraftfahrzeug mit am Kofferraum angeordneten Beduftungsvorrichtungen.

### Weg zur Ausführung der Erfindung

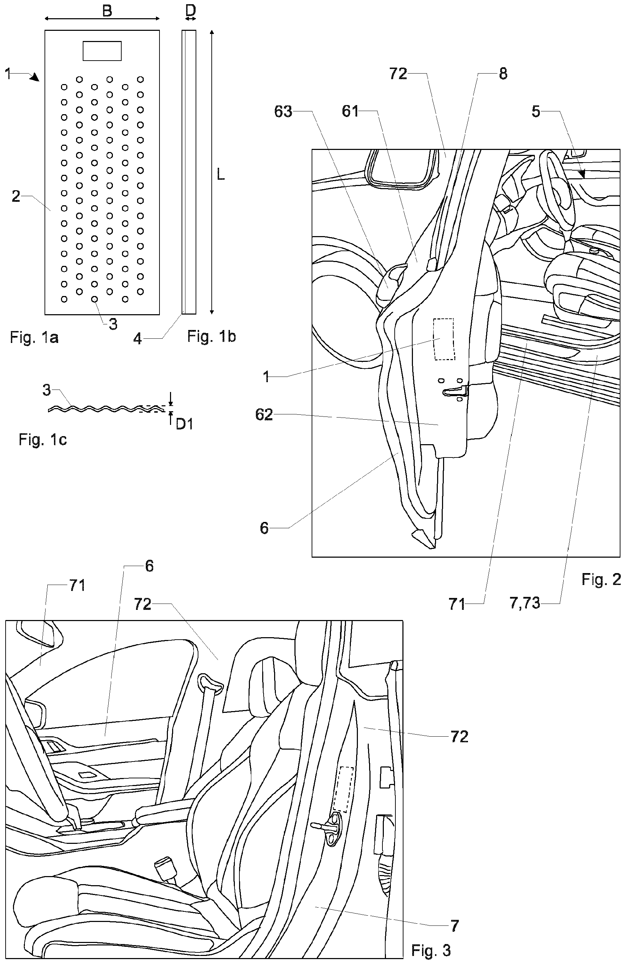

Die Fig. 1a und 1b zeigen eine erfindungsgemässe Beduftungsvorrichtung 1. Sie hat eine Länge L von 108 mm, eine Breite B von 50 mm und eine Dicke D von 2.7 mm. Die Beduftungsvorrichtung 1 weist somit eine flache Form auf, wobei die Dicke D wesentlich kleiner ist als die längste Erstreckung der Beduftungsvorrichtung 1. Die längste Erstreckung entspricht der Diagonalen über Länge L, Breite B und Dicke D.

Die Beduftungsvorrichtung 1 umfasst eine Hülle 2 und einen Duftkörper 3. Die Hülle 2 ist perforiert, besteht aus dem Material Polyvinylchlorid und umhüllt den Duftkörper 3. Die Fig. 1c zeigt den Duftkörper 3 ohne die Hülle 2 und weist eine Dicke D1 von 2.3 mm auf. Der Duftkörper 3 besteht aus dem Material Ethylenvinylacetat und ist mit einem Duftstoff gefüllt. Zudem ist der Duftkörper 3 gewellt geformt, sodass die Oberfläche für die Emission des Duftstoffes optimiert ist. Ist der Duftkörper 3 nicht verdeckt, emittiert dieser permanent Duftstoff durch die perforierte Hülle 2 nach aussen.

Aufgrund der gewählten Materialen und der geringen Dicke lässt sich die Beduftungsvorrichtung 1 relativ leicht krümmen, sodass die Beduftungsvorrichtung 1 auch auf gekrümmten Oberflächen leicht befestigt werden kann. Zur Befestigung dient eine an der Hülle 2 angebrachte Klebstoffschicht 4, insbesondere ein Doppelklebestreifen.

Die Fig. 2 bis 6 zeigen ein Kraftfahrzeug mit unterschiedlichen Positionen, an welchen die Beduftungsvorrichtung 1 montiert sein kann. Fig. 2 zeigt ein Kraftfahrzeug mit einem Innenraum 5 und einer Türe 6. Gezeigt ist die Fahrertüre bzw. eine Seitentüre, welche links vorne am Kraftfahrzeug angeordnet ist. Die Türe 6 umfasst eine Aussenfläche 61 und eine Schmalseite 62. An der Aussenfläche 61 ist die Türklinke 63 angeordnet. Die Türe 6 wird im geschlossenen Zustand von einem Türrahmen 7 umgeben, welcher Bestandteil des Gehäuses des Innenraums 5 ist. Bestandteil des Türrahmens 7 können beispielsweise der Türschweller 71, die A-Säule 72, die B-Säule 73, die C-Säule 74 oder ein Kofferraumtürrahmen 75 sein. Ist die Türe 6 geschlossen, berühren sich die Schmalseite 62 der Türe 6 und der Türrahmen 7 des Gehäuses des Innenraums 5.

Bei der in Fig. 2 gezeigten Anordnung ist die Beduftungsvorrichtung 1 an der Schmalseite 62 der Beifahrertüre angeordnet. Ist die Türe 6 geöffnet, ist die Beduftungsvorrichtung 1 sichtbar und für eine Demontage gut zugänglich. Die Beduftungsvorrichtung 1 ist freigelegt und emittiert Duftstoff, welchen der Benutzer beim Einsteigen in den Innenraum und beim Aussteigen aus dem Innenraum gut wahrnehmen kann.

Ist die Türe 6 verschlossen, weil das Kraftfahrzeug fährt oder abgestellt ist, wird die an der Schmalseite 62 angeordnete Beduftungsvorrichtung 1 vom Türrahmen 7 verdeckt. Genauer gesagt wird die Beduftungsvorrichtung 1 von der B-Säule 73 verdeckt, welche teilweise Bestandteil des Türrahmens 7 ist. Ist die Türe 6 verschlossen, ist die Beduftungsvorrichtung 1 von der Türe 6 und dem Türrahmen 7 eingeklemmt, d.h. der Türrahmen 7 drückt auf die bei offener Türe 6 freiliegende Oberfläche der Beduftungsvorrichtung 1. Mit anderen Worten steht die Beduftungsvorrichtung 1 mit der Türe 6 und dem Türrahmen 7 in Berührung. Bei geschlossener Türe 6 emittiert die Beduftungsvorrichtung 1 keinen Duftstoff. Die Beduftungsvorrichtung 1 ist weder für Personen ausserhalb des Kraftfahrzeuges noch für Insassen im Innenraum 5 sichtbar oder zugänglich.

Die Beduftungsvorrichtung 1 ist derart angeordnet, dass sie alleine mittels Schliessen der Türe 6 verdeckt und alleine mittels Öffnen der Türe 6 freigelegt werden kann. Um die Emission von Duftstoff zu starten bzw. zu stoppen, braucht ein Benutzer somit nichts weiter zu tun, als die Türe 6 zu öffnen bzw. zu schliessen.

Die Fig. 3 zeigt eine Anordnung, bei welcher die Beduftungsvorrichtung 1 nicht an der Türe 6, sondern am Türrahmen 7 bzw. an der B-Säule 72 angeordnet ist. Die Beduftungsvorrichtung 1 ist somit an einer Oberfläche der Karosserie befestigt. Ist die Türe 6 geschlossen, drückt die Schmalseite 62 der Türe 6 auf die bei offener Türe 6 freiliegende Oberfläche der Beduftungsvorrichtung 1. Ist die Türe 6 offen, liegt die Beduftungsvorrichtung 1 frei und emittiert Duftstoff. Ist die Türe 6 geschlossen, ist die Beduftungsvorrichtung 1 verdeckt und emittiert keinen Duftstoff.

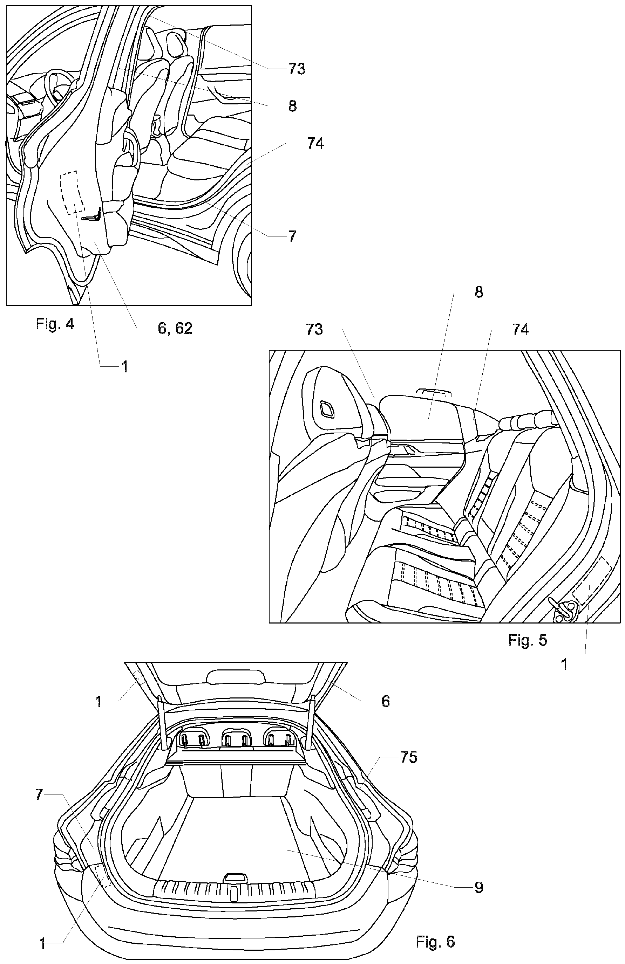

Die Fig. 4 zeigt eine Anordnung an der Schmalseite 62 der Türe 6, welche eine Seitentüre beim Rücksitz ist. Fig. 5 zeigt eine Anordnung der Beduftungsvorrichtung 1 am Türrahmen 7 bei der Seitentüre des Rücksitzes. Die Anordnung ist analog zu der in den Fig. 2 und 3 gezeigten Anordnung bei der Fahrertüre. Insbesondere in Fig. 5 ist sichtbar, dass die Beduftungsvorrichtung 1 an einer gekrümmten Oberfläche des Türrahmens 7 angeordnet ist. Da die Beduftungsvorrichtung relativ dünn ausgestaltet ist, lässt sich diese sehr einfach krümmen.

Bei den Anordnungen gemäss den Fig. 2 bis 5 ist sichtbar, dass die Beduftungsvorrichtungen 1 jeweils unterhalb des Fensters 8 angeordnet sind.

Fig. 6 zeigt eine Ansicht des Kraftfahrzeuges von hinten auf den Kofferraum 9. Die Türe 6 des Kofferraums 9 ist geöffnet. Im äusseren Bereich der Türe 6 ist eine Beduftungsvorrichtung 1 angeordnet. Alternativ kann die Beduftungsvorrichtung auch am Türrahmen 7 angeordnet sein. Beide Alternativen sind in Fig. 6 dargestellt. Ist die Türe 6 des Kofferraums 9 angeordnet, ist die Beduftungsvorrichtung 1 von der Türe 6 und dem Türrahmen 7 eingeklemmt. Die Beduftungsvorrichtung 1 emittiert keinen Duftstoff. Öffnet der Benutzer die Türe 6 des Kofferraums 9, wird die Beduftungsvorrichtung 1 freigelegt und der Benutzer kann den Duftstoff wahrnehmen, welcher von der Beduftungsvorrichtung 1 emittiert wird.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Kraftfahrzeug, insbesondere ein Personenkraftwagen, aufweisend
- einen Innenraum (5),
- eine Türe (6),
- eine Beduftungsvorrichtung (1) umfassend einen Duftstoff,
**dadurch gekennzeichnet, dass** die Beduftungsvorrichtung (1) derart angeordnet und ausgestaltet ist, dass die Beduftungsvorrichtung (1) nur bei geöffneter Türe (6) den Duftstoff emittiert.

2. Kraftfahrzeug nach Anspruch 1, wobei die Beduftungsvorrichtung (1) derart angeordnet und ausgestaltet ist, dass die Beduftungsvorrichtung (1) bei offener Türe (6) zumindest teilweise freigelegt und bei geschlossener Türe (6) verdeckt, insbesondere vollständig verdeckt, ist.

3. Kraftfahrzeug nach einem der vorangehenden Ansprüche, wobei die Beduftungsvorrichtung (1) derart angeordnet und ausgestaltet ist, dass die Beduftungsvorrichtung (1) bei geschlossener Türe (6) sowohl für einen Insassen als auch für eine Person ausserhalb des Kraftfahrzeuges nicht sichtbar oder zugänglich ist.

4. Kraftfahrzeug nach einem der vorangehenden Ansprüche, wobei die Beduftungsvorrichtung (1) derart angeordnet und ausgestaltet ist, dass
- alleine eine Schliessbewegung der Türe (6) die Beduftungsvorrichtung (1) verdeckt, und
- alleine eine Öffnungsbewegung der Türe (6) die Beduftungsvorrichtung (1) freilegt.

5. Kraftfahrzeug nach einem der vorangehenden Ansprüche, wobei die Beduftungsvorrichtung (1) derart angeordnet und ausgestaltet ist, dass die Beduftungsvorrichtung (1) bei geschlossener Türe (6) sowohl in Berührung mit einem Türrahmen (7) als auch in Berührung mit der Türe (6) steht.

6. Kraftfahrzeug nach einem der vorangehenden Ansprüche, wobei die Beduftungsvorrichtung (1) an einer Schmalseite (62) der Türe (6) angeordnet ist, insbesondere befestigt ist, insbesondere mittels Adhäsion, insbesondere mittels eine Doppelklebestreifens, befestigt ist.

7. Kraftfahrzeug nach einem der vorangehenden Ansprüche, wobei die Beduftungsvorrichtung (1) am Türrahmen (7) des Kraftfahrzeuges angeordnet ist, insbesondere befestigt ist, insbesondere mittels Adhäsion, insbesondere mittels eine Doppelklebestreifens, befestigt ist.

8. Kraftfahrzeug nach einem der vorangehenden Ansprüche, wobei die Beduftungsvorrichtung (1) an einer Oberfläche der Karosserie angeordnet ist, welche von der Türe (6), insbesondere von der Schmalseite (62) der Türe (6), bei geschlossener Türe (6) verdeckt ist.

9. Kraftfahrzeug nach einem der vorangehenden Ansprüche, wobei die Türe (6) eine Seitentüre oder eine Kofferraumtüre ist.

10. Kraftfahrzeug nach einem der vorangehenden Ansprüche, wobei die Türe (6) ein Fenster aufweist und die Beduftungsvorrichtung (1) unterhalb des Fensters (8) angeordnet ist.

11. Beduftungsvorrichtung (1) umfassend einen Duftstoff und aufweisend eine flache Form mit einer Dicke, insbesondere einer konstanten Dicke,
insbesondere wobei das Zehnfache, insbesondere das Zwanzigfache, insbesondere das Vierzigfache, der Dicke kleiner ist als die längste Erstreckung der Beduftungsvorrichtung (1).

12. Beduftungsvorrichtung nach Anspruch 11, aufweisend eine Hülle (2) und einen Duftkörper (3), welcher den Duftstoff umfasst,
insbesondere wobei die Hülle (2) für den Duftstoff durchlässig, insbesondere perforiert, ist,
insbesondere wobei der Duftkörper (3) gewellt ist.

13. Beduftungsvorrichtung (1) nach Anspruch 11 oder 12, wobei die Beduftungsvorrichtung (1) entlang ihrer längsten Erstreckung bis mindestens zu einer Krümmung von 1/100 mm⁻¹, insbesondere bis zu einer Krümmung von mindestens 1/75 mm⁻¹, insbesondere bis zu einer Krümmung von mindestens 1/50 mm⁻¹, elastisch krümmbar ist.

14. Kraftfahrzeug nach einem der Ansprüche 1 bis 10, wobei die Beduftungsvorrichtung (1) gemäss einem der Ansprüche 11 bis 13 ausgestaltet ist.

15. Verfahren zur Ausführung von Unterhaltsarbeiten in einer Werkstatt an einem Kraftfahrzeug, nach einem der Ansprüche 1 bis 10 oder 14, umfassend die Unterhaltsarbeit, dass der Duftstoff in der Beduftungsvorrichtung (1) nachgefüllt oder die Beduftungsvorrichtung (1) ausgewechselt wird.
